# EUROPEAN PATENT SPECIFICATION

(11) **EP 1 189 711 B1**
(45) Date of publication and mention of the grant of the patent: **14.07.2004**
(21) Application number: 99930110.4
(22) Date of filing: 05.05.1999
(51) Int. Cl.: B21D 22/14, B21D 22/18

(54) **METHOD OF MANUFACTURING A DOME FROM AN UNDERSIZED BLANK**
VERFAHREN ZUR HERSTELLUNG EINES KUPPELFÖRMIGEN GEGENSTANDES AUS EINEM UNTERDIMENSIONIERTEN ROHLING
PROCEDE DE FABRICATION D'UN DOME A PARTIR D'UN FLAN SOUS-DIMENSIONNE

(43) Date of publication of application: 27.03.2002
(73) Proprietor: STANDEX INTERNATIONAL CORPORATION, Salem New Hampshire 03079 (US)
(72) Inventor: SHRAYER, Emmanuil, Lexington, MA 02173 (US); MORGANTI, Richard, J., Billerica, MA 01821 (US)
(74) Representative: Nätebusch, Roderich
(86) International application number: PCT/US1999/008161
(87) International publication number: WO 2001/049429

(56) References cited:
- GB-A- 248 312
- US-A- 3 355 920
- US-A- 4 170 889
- US-A- 5 235 837
- US-A- 5 426 964

## Description

This present invention relates to the manufacture of large metallic dome structures, and in particular to a method of manufacturing rockets domes from undersized blanks.

### BACKGROUND OF THE INVENTION

Advancements in satellites, and the enhancements to telecommunications and other services that sophisticated satellites make possible, have dramatically increased the number of commercial satellites being launched. As each launch is an expensive event, there has been a trend toward increasing the number of features and components on satellites, allowing multiple users to share the costs and benefits of the satellite launch. Increased features have resulted in an increase in the size of these satellites, and consequently the size of the launch vehicles required to carry these satellites into their operational orbit. Generally, satellite launch vehicles are multi-stage rockets, with each stage including its own fuel tank, with domes. It is in the manufacture of these larger rocket domes that current manufacturing methods fall short.

Rocket domes have typically been fabricated from single blanks of aluminum alloys or other alloys that are hot spun over mandrels to form the desired shape. Common mandrel spinforming methods include clamping a blank between a rotatable spindle and a die, or mandrel, corresponding to the shape to be formed. The clamped assembly is then rotated and the blank is heated while a tool, such as a spinning roller, is used to apply pressure. progressively, to a small area of the metal blank. thereby causing the small area to deform in the direction of the pressure. As the metal blank rotates, a circumferential band of the blank is progressively deformed and. by moving the spinning roller in a radial direction with respect to the rotating metal blank, the desired shape is produced.

Other spinning methods, such as those described in United States Pat. Nos. 5,235,837 and 5,426,964, utilize a numerically controlled second roller in place of the mandrel to exert directed forces on both sides the blank to deform the material in the desired manner. These methods are useful for cold rolling exotic materials, or for hot rolling tanks or other pressure vessels. However, dual roller systems have not traditionally been used in the production of rocket domes of the characteristics described herein. The use of this type of equipment for very large domes will necessitate welding a flange to the polar and equatorial region of the dome. Also, if dome configuration had nozzles with the dome shell, this would also have to be welded into place.

Traditionally, rocket domes have been manufactured by the mandrel spinning process from blanks having a surface area that is greater than or equal to the surface area of the domes to be spun. This process results in a dome having the desired diameter and a substantially constant material thickness. Traditional hot mandrel spinning methods have been effective, as long as the surface area of the necessary blank was smaller than the largest commercially available blank diameter. However, to manufacture domes for large rockets using traditional mandrel spinning techniques would require a circular blank with an outside diameter well in excess of the maximum commercially available blank size.

One possible solution to this problem is to weld several blanks together to provide a starting outside diameter of sufficient size. However, this is a very expensive approach due to the meticulous processes that must be employed to insure the integrity of the welds, and the subsequent x-raying and testing required to qualify each weld.

Another solution would involve the production of a rolling press that could produce plates of the desired thickness having diameters in excess those that are currently commercially available. However, neither material fabricators nor spinning manufacturers are likely to invest in such a press as the low demand for plates of these widths, and the high cost of designing and building this equipment, make this solution an unprofitable one.

A method of manufacturing a rocket dome from an undersized blank that does not require multiple blanks to be welded together, does not require blanks to be rolled to the desired diameter, and may be performed on common hot mandrel spinning equipment is not known in the art.

### SUMMARY OF THE INVENTION

Disclosed is a method of forming a dome from a substantially round blank having a surface area less than the surface area of the dome. The basic embodiment of the method includes the steps of shear forming, spin stretching the deformed blank in selected areas along its circumference to form a stretched blank, inside spinning the stretched blank into a rough dome, and finish spinning the rough dome into the finished dome.

In the preferred embodiment of the method, the shear forming step comprises the steps of coaxially securing an inside surface of the blank to a rotatable flat-nosed conical mandrel, rotating the blank on the flat-nosed conical mandrel, heating a predetermined portion of the blank, and applying a force to an outer surface of the blank such that the blank is deformed in a shape of the flat-nosed conical mandrel to form the deformed blank. In this embodiment, the spin-stretching step involves spin-stretching the blank in predetermined locations to form a stretched blank having a surface area that is substantially equal to the surface area of the dome. The preferred inside spinning step involves coaxially securing an outside surface of the stretched blank within a rotatable concave dome mandrel, rotating the blank on the concave dome mandrel, heating a predetermined portion of the stretched blank, and applying a force to an inner surface of the stretched blank such that the stretched blank is deformed to form a dome shaped blank. The inside-spinning step is necessary for transformation of the conical shape of the blank after shear forming and spin stretching into a dome shape. Finally it is preferred that finish spinning step comprises the steps of coaxially securing the inside surface of the dome shaped blank to a rotatable convex dome mandrel, rotating the dome shaped blank on the convex dome mandrel, heating a predetermined portion of the dome shaped blank, applying a force to the outside surface of the dome shaped blank such that the dome shaped blank is deformed in a shape of the convex dome mandrel to form the dome.

The method of the present invention allows a rocket dome having desired mechanical properties to be manufactured from a blank having a surface area smaller than the desired dome surface area and without incurring the high costs of welding multiple blanks, manufacturing and operating an oversized roller to produce oversized blanks, or purchasing expensive dual-roller spinning machinery.

Therefore, it is an object of the present invention to provide a method for manufacturing rocket domes from blanks having a surface area smaller than the desired dome surface area that results in domes having desired mechanical properties.

It is a further object of the present invention to provide a method for manufacturing rocket domes from blanks having a surface area smaller than the desired dome surface area that does not require welding multiple blanks together.

It is a further object of the present invention to provide a method for manufacturing rocket domes from blanks having a surface area smaller than the desired dome surface area that does not require blanks to be rolled to a size larger than the maximum available blank size.

It is a further object of the present invention to provide a method for manufacturing rocket domes manufacturing rocket domes from blanks having diameters smaller than the desired dome diameters that does not require the use of dual-roller spinning machinery.

These objects of the invention are not meant to be exclusive and other features, aspects, and advantages of the present invention will be readily apparent to those of ordinary skill in the art when read in conjunction with the following description, appended claims and accompanying drawings.

### BRIEF DESCRIPTION OF THE DRAWINGS

FIG. 1 is a pictorial illustration of a multi-stage rocket, wherein at least one of the stages includes a fuel tank having domed top and bottom surfaces.
FIG. 2 is a cross sectional view of a dome that has been spun utilizing prior art spinning methods superimposed over a cross sectional view of a dome manufactured according to the method of the present invention.
FIG. 3 is a cross sectional view of a dome that has been spun utilizing the method of the present invention.
FIG. 4 is a flow chart of the basic embodiment of the method of the present invention.
FIG. 5 is a cross sectional view of a raw circular blank coaxially secured to a rotatable flat-nosed conical mandrel prior to performing the shear spinning step of the method of the present invention.
FIG. 6 is a cross sectional view of a shear spun blank coaxially positioned over the rotatable flat nosed conical mandrel after the shear spinning step has been completed.
FIG. 7 is a cross sectional view of the shear spun blank positioned within a concave dome mandrel with the left side representing the blank after the inside spinning step had been completed and the right side illustrating the blank during the inside spinning step.
FIG. 8 is a cross sectional view of an inside spun blank positioned on the finish spinning mandrel with the left side representing the blank after the finish spinning step has been completed and the right side illustrating the blank during the finish spinning step.

### DETAILED DESCRIPTION OF THE INVENTION

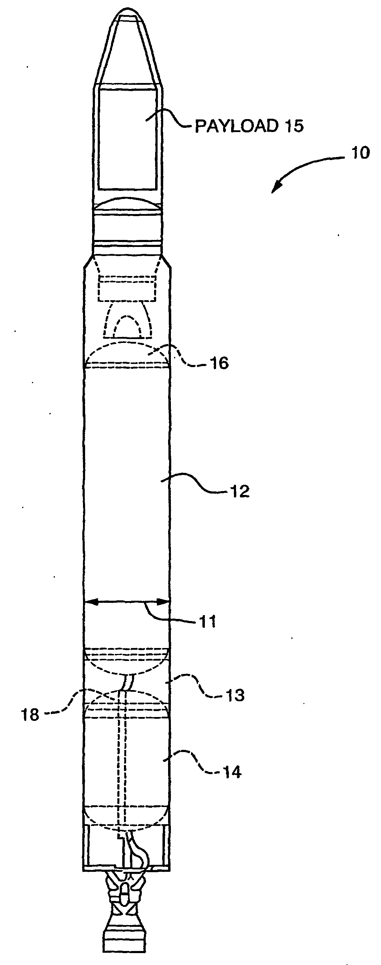

Fig. 1 is a pictorial illustration of a multi-stage rocket 10. Rocket 10 includes an oxygen tank 14 and a hydrogen tank 12, joined by connecting space 13, and a payload 15. Oxygen tank 14 and hydrogen tank 12 are substantially cylindrical structures having a diameter 11 and having domes 18, 16 at the top and bottom of each respective tank. In rockets of this type, it is common for domes 18, 16 to have a diameter 11 in excess of the maximum available blank size, and it is to the manufacture of these domes 16, 18 that the present invention is directed.

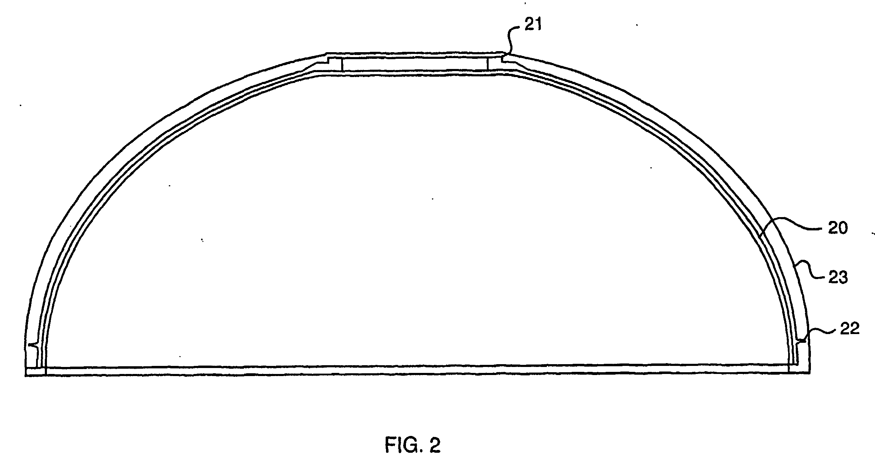

Referring now to FIG. 2, a cross sectional view of an unmachined dome that has been spun utilizing prior art spinning methods is shown superimposed over a cross sectional view of a finished machined dome. Prior art dome 23 is spun using known techniques and results in a spun dome having a constant thickness. The thickness of the prior art dome 23 is chosen based upon the thickness requirement at the thickest point plus machining allowance. The thickest points of the dome are the Y-Cord or Flange at the equator and/or the Manhole Flange at the apex. Therefore certain portions of the dome are much thicker than necessary, for final machining. The dome 20 of the present invention, however. does not have a constant thickness. but rather has a thickened portion 26 around the manhole at the apex of the dome, a thin wall membrane 24 along the sides, and a thickened flange area 25 for connecting the dome to the cylindrical body of the tank. The thin wall membrane dome 24 is the location of shear and stretch spinning, thus allowing the use of a smaller starting material blank. These starting blanks would be smaller than those used for traditional spinning.

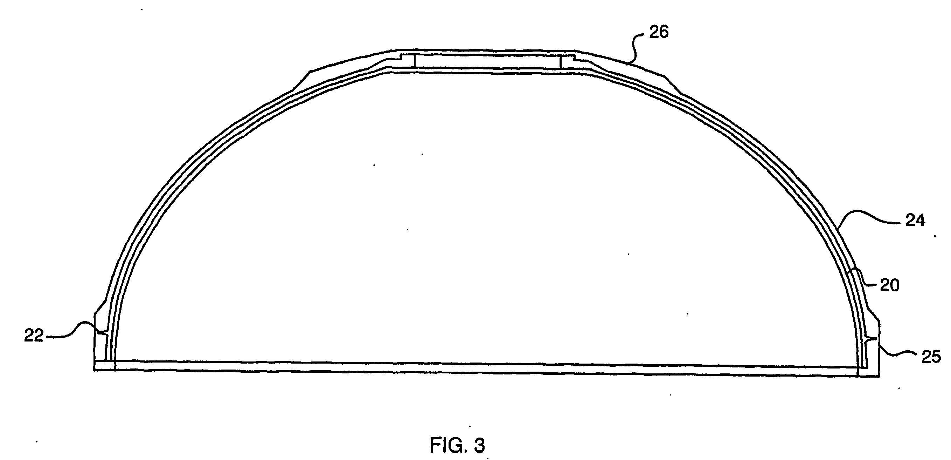

Referring now to FIG. 3, is a cross sectional view of an unmachined dome that has been spun utilizing the method of the present invention superimposed over the finished rocket dome the same as of FIG. 2. As shown in FIG. 3, the spun dome 24 includes a thickened region 26 around the manhole area and a second thickened region 25 around the flange area. These thickened regions have a thickness equal to the thickness of the unspun blank and are machined using conventional techniques to produce the finished flange 22 and manhole area 21. In the membrane area 24 the spun dome is substantially thinner due to the shear and stretch spinning processes.

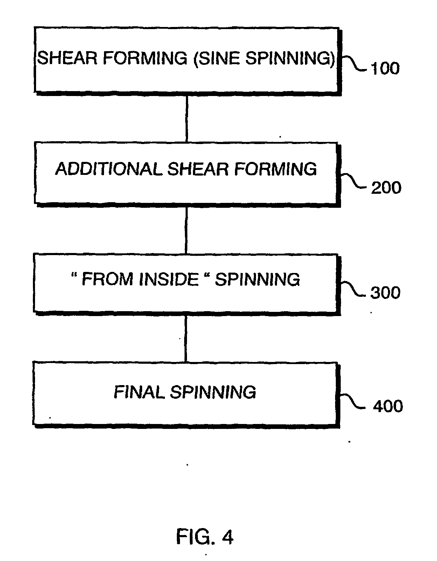

Referring now to FIG. 4, a flow chart of the basic embodiment of the method of the present invention is shown. The basic embodiment of the method includes the steps of shear forming 100 the blank over a conical mandrel, performing additional shear forming operations 200 for additional thinning in selected areas along its circumference to form a conical shaped blank of varying wall thickness, inside spinning 300 the stretched blank into a concave forming mandrel having a geometry closely representing the final spun dome, and final spinning 400 the rough dome over a convex forming mandrel into the finished dome. As will be readily apparent from the foregoing explanation. this method allows a rocket dome having desired mechanical properties to be manufactured from a blank having a surface area smaller than the desired dome surface area and without incurring the high costs of welding multiple blanks or manufacturing and operating an oversized roller to produce oversized blanks.

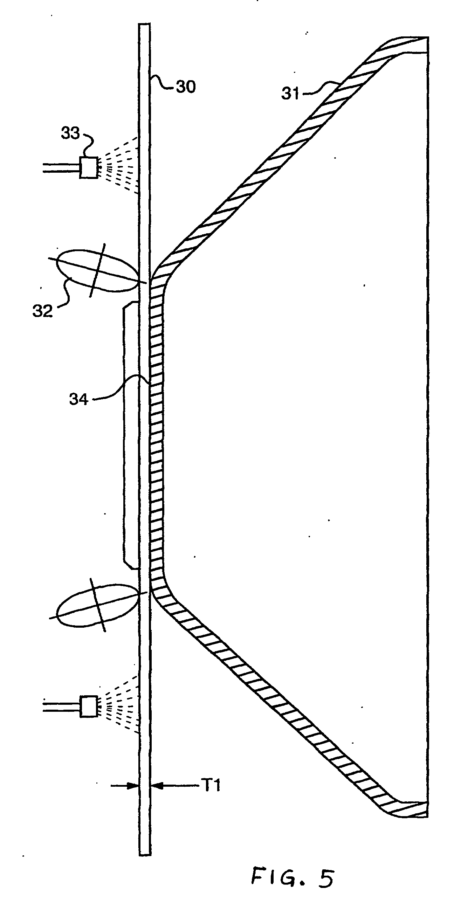

Referring now to FIG. 5, the shear forming step 100 of FIG. 4 is described. The shear forming step 100, also referred to as sine spinning, begins by coaxially securing a metallic circular blank 30 having a thickness T₁ to a flat-nosed conical mandrel 31. In the preferred method, the circular blank 30 is cut from a single plate of material. Once secured, the blank 30 and the mandrel 31 are coaxially rotated about an axis. As the blank 30 and the mandrel 31 rotate, the blank is heated by a heat source 33 which moves along a track between the outer and inner regions of the circular blank 30. In the preferred embodiment, the heat source 33 is a gas torch, but in other embodiments heat may be applied by radiant electrical heat, laser, or other known heating sources capable of heating the blank to a maximum temperature of 371°C (700°F). Once the surface of the blank 30 is sufficiently heated, a force is applied to the blank with one or more spinning rollers 32. Spinning rollers are designed to contact the blank 30 such that the roller rolls as the blank is rotated. As the roller rolls, it exerts a force along a band of the surface of the blank and stretches the blank 30. This is accomplished by progressively moving the roller 32 in a tangential direction across the blank 30, starting at the transition point between the flat top portion 34 and the downward sloping side portions of the mandrel 31 and ending at the outside edge of the blank 30. This step 100 results in a deformed blank having a reduced thickness and a shape similar to that of flat-nosed conical mandrel 31.

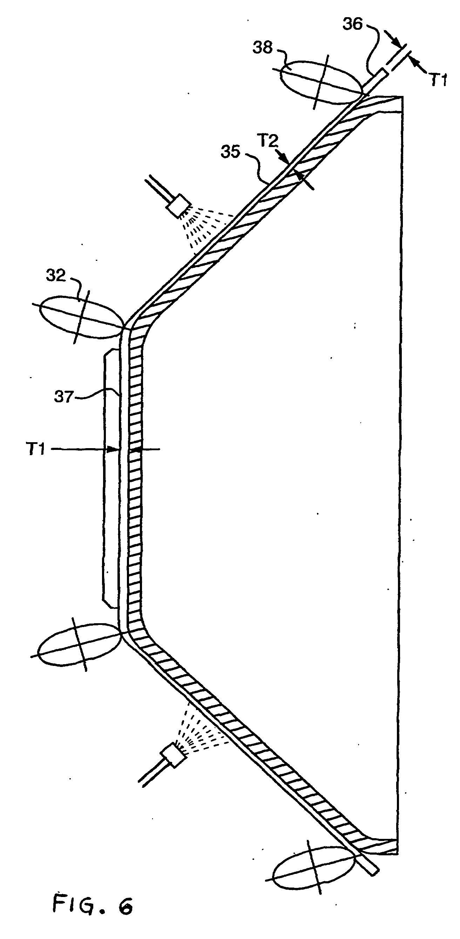

Referring now to FIG. 6, the additional shear forming step 200 is described. In the preferred embodiment, the additional shear forming step 200 is performed on the same flat-nosed conical mandrel 31 as the initial shear forming step 100, and thus the deformed blank is not removed from the mandrel 31 before the additional shear forming step 200 is performed. However, in some cases. such as where inspection is required between steps, the deformed blank may be removed and require re-attachment to the flatnosed conical mandrel 31 prior to performing the additional shear forming step 200. Regardless of whether intermediate removal and attachment steps are required, the first step in the additional shear forming step 200 is to position heat source 33 at a predetermined point along the conical radius of the deformed blank such that the temperature of the blank is increased along a radial band. Once the radial band of the deformed blank reaches a desired temperature, 260 - 371°C (500 - 700 degrees F) being preferred, a force is applied by the roller 32 at another point along the heated radial band. In the preferred embodiment, a force of between 5 and 50 tons is applied in the tangential direction in relation to the plane created by the sloping sidewall of the deformed blank. The roller 32 is then progressively moved in a tangential direction such that the desired portion of the sloping sidewall of the deformed blank is stretched again forming a thin walled region 35. In the preferred embodiment, this desired portion comprises the area between the transition point and the flange area at the end of the deformed blank and thus the roller 32 travels to a bottom position 38 and is stopped. As shown in FIG. 6, this additional shear forming step 200 results in a stretched blank having a thickened region 37 around the manhole area having a thickness T₁ equal to the thickness of the original blank, a thin walled region 35 having a thickness T₂, and a second thickened region 36 around the flange area also having a thickness T₁.

Aerospace domes require final contour machining after spin forming. Spun domes are designed to allow for a machining allowance on all surfaces. Typical dome geometry's possess thickened regions at the apex to facilitate bolting of manhole covers and thickened regions at the equator to facilitate attachment of the finish tank into the launch vehicle. The dome membrane is typically very thin. It is in the membrane region that the stretching is performed because of the excess stock on condition. As shown in FIG. 6 the geometry of the stretched blank represents the two thick regions that are substantially equal to the thickness of the starting blank and the thinner cross section along the side wall.

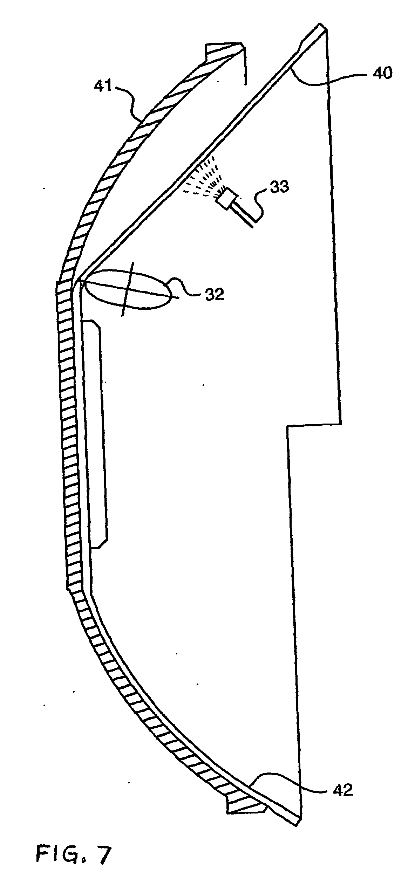

Referring now to FIG. 7, the inside spinning step 300 of the method of the present invention is described. FIG. 7 shows a cross sectional view of the shear spun blank positioned within a concave dome mandrel 41 with the bottom side representing the blank after the inside spinning step had been completed and the top side illustrating the blank during the inside spinning step. After the additional shear-forming step 200 is completed and before the inside-spinning step 300 is performed, the shear formed blank is removed from the flat-nosed conical mandrel 31 and is coaxially secured within a rotatable concave mandrel 41. Once secured, the shear-spun blank 40 and concave dome mandrel 41 are rotated and the inner surface of the downwardly sloping sidewalls is heated to a desired temperature by the heat source 33. As the shear spun blank 40 rotates, roller 32 travels over the inner surface of the shear spun blank 40 in a controlled manner to apply a force that reshapes the downwardly sloping sidewalls to the shape of the inner surface of the concave dome mandrel 41 forming a substantially dome shaped blank 42.

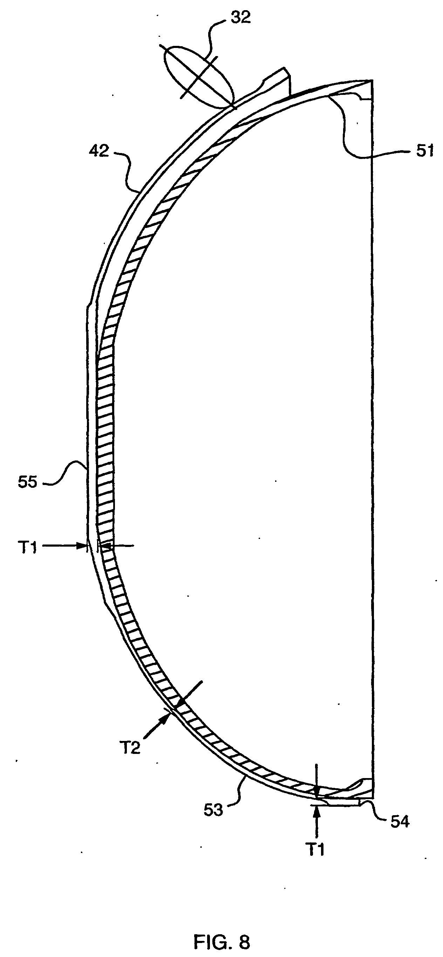

Referring finally to FIG. 8, the final spinning step 400 of the method of the present invention is described. FIG. 8 shows a cross sectional view of a dome shaped blank 42 positioned on the final spinning mandrel with the bottom side representing the finished blank 53 after the finish spinning step has been completed and the top side illustrating the dome shaped blank 42 during the final spinning step. Once the dome shaped blank 42 is completed, it is removed from concave dome mandrel 41. It is here that two different approaches for aluminum alloys may be taken each resulting in a dome having a different temper.

The first approach involves coaxially mounting the dome shaped blank 42 onto the outside of a convex dome mandrel 51 and spinning the blank 42 at elevated temperature to achieve the final dome geometry. Convex dome mandrel 51 is designed and dimensioned to allow a properly dimensioned, smooth, dome to be formed from dome shaped blank 42. As in the previous spinning steps, the dome shaped blank 42 and the convex dome mandrel 51 coaxially rotate, the heat source 33 heats the outer surface of the blank 42, and roller 32 applies a force to portions of the outer surface of the dome shaped blank 42. This force drives the inner surface of the dome shaped blank into to face-to-face contact with the outer surface of the convex dome mandrel 51. This exertion of this force across the entire surface of the dome shaped blank 42 results in a finished dome 53 of the desired diameter and having a first thickness, T2, in stretched regions of the dome, and a second thickness, T1, in regions where the dome has not been stretched. The finished aluminum dome 53 is subsequently solution and age heat treated to the final mechanical strength of the material, T62 temper being preferred.

The second approach involves solution treating the dome shaped blank 42 after the inside spinning operation and prior to final spinning and performing the final spinning operation at room temperature to provide additional deformation of the material and the induction of cold work to the material. The age heat treatment operation is then performed to further increase the mechanical strength of the dome to a T8 temper. The additional deformation can be achieved at room temperature because the membrane wall is very thin due to the previous shear forming operations, and because the amount of deformation required to bring the dome to the final geometry is minimal due to the design of the concave spinning mandrel. A T8 temper is achieved in part because the amount of cold work deformation is calculated into the design of the concave spinning mandrel.

Although the present invention has been shown and described with respect to several preferred embodiments thereof, various changes, admissions and additions to the form and detail thereof, may be made therein, without departing from the scope of the invention as defined in the appended claims.

## Claims

1. A method of forming a dome (20, 53) from a substantially round blank (30) wherein a surface area requirement of said dome is greater than the surface area of said blank, said method comprising the steps of:
shear forming said blank, said shear forming step comprising the steps of;
coaxially securing an inside surface of the blank (30) to a rotatable flat-nosed conical mandrel (31);
rotating said blank (30) on said flat-nosed conical mandrel (31);
heating a predetermined portion of said blank;
applying a force to an outer surface of said blank (30) such that said blank is
shear formed in a shape of said flat-nosed conical mandrel (31);
additional shear forming said blank in predetermined locations (35) such that a thickness of said blank in said predetermined locations is reduced;
removing said stretched blank from said mandrel;
inside spinning said blank (40) to form a dome shaped blank, said inside spinning step comprising the steps of;
coaxially securing an outside surface of said blank (40) within a rotatable concave dome mandrel (41);
rotating said blank on said concave dome mandrel;
heating a predetermined portion of said blank;
applying a force to an inner surface of said blank (40) such that said blank is deformed to form a dome shaped blank (42):
removing said dome shaped blank (42) from said concave dome mandrel (41): and
final spinning said dome shaped blank (42) into said dome (53), said finish spinning step comprising the steps of:
coaxially securing the inside surface of said dome shaped blank (42) to a rotatable convex dome mandrel (51),
rotating said dome shaped blank on said convex dome mandrel;
heating a predetermined portion of said dome shaped blank;
applying a force to said outside surface of said dome shaped blank such that said dome shaped blank (42) is deformed in a shape of said convex dome mandrel (51) to form the dome (53).

2. The method as claimed in claim 1 wherein said step of additional shear forming said blank in predetermined locations comprises the steps of:
heating a predetermined portion of said deformed blank;
applying a force to an outside surface of said deformed blank such that a thickness of said predetermined portion (35) of said deformed blank is decreased and such that the surface area of said stretched blank is greater than the surface area of said deformed blank.

3. The method as claimed in claim 2, wherein each of said steps of applying a force comprises applying a force with a roller (32).

4. The method as claimed in claim 3 wherein said step of applying a force to said deformed blank of said spin stretching step comprises applying a force having a vector of between 44.5 and 445 kN (5 and 50 ton) in relation to said outside surface of said deformed blank.

5. The method as claimed in claim 2 wherein each of said heating steps comprises heating to a temperature of a maximum of 371°C (700 degrees Fahrenheit).

6. The method as claimed in claim 1, further comprising the step of:
annealing said raw circular blank (30) prior to said step of spinning said secured circular blank.

7. The method as claimed in claim 1 further comprising the step of solution heat treating said dome (53).

8. The method as claimed in claim 1 further comprising the step of age heat treating said dome (53).

9. The method as claimed in claim 1 wherein said dome is an aluminum alloy, and wherein said method further comprises the steps of solution heat treating and age heat treating said dome (53) to a T62 temper.

10. A method of forming a dome (20, 53) from a substantially round blank (30) wherein a surface area requirement of said dome is greater than the surface area of said blank, said method comprising the steps of:
shear forming said blank, said shear forming step comprising the steps of;
coaxially securing an inside surface of the blank (30) to a rotatable flat-nosed conical mandrel (31),
rotating said blank (30) on said flat-nosed conical mandrel (31);
heating a predetermined portion of said blank;
applying a force to an outer surface of said blank (30) such that said blank is shear formed in a shape of said flat-nosed conical mandrel (31);
additional shear forming said blank in predetermined locations (35) such that a thickness of said blank in said predetermined locations is reduced;
removing said stretched blank from said mandrel;
inside spinning said blank (40) to form a dome shaped blank, said inside spinning step comprising the steps of;
coaxially securing an outside surface of said blank (40) within a rotatable concave dome mandrel (41);
rotating said blank on said concave dome mandrel:
heating a predetermined portion of said blank;
applying a force to an inner surface of said blank (40) such that said blank is deformed to form a dome shaped blank (42),
removing said dome shaped blank (42) from said concave dome mandrel (41);
solution heat treating said dome shaped blank; and
final spinning said dome shaped blank (42) into said dome (53), said finish spinning step comprising the steps of;
coaxially securing the inside surface of said dome shaped blank (42) to a rotatable convex dome mandrel (51);
rotating said dome shaped blank on said convex dome mandrel; and
applying a force to said outside surface of said dome shaped blank such that said dome shaped blank (42) is deformed in a shape of said convex dome mandrel (51) to form the dome (53).

11. The method as claimed in claim 10 wherein said step of additional shear forming said blank in predetermined locations comprises the steps of:
heating a predetermined portion of said deformed blank;
applying a force to an outside surface of said deformed blank such that a thickness of said predetermined portion (35) of said deformed blank is decreased and such that the surface area of said stretched blank is greater than the surface area of said deformed blank.

12. The method as claimed in claim 11, wherein each of said steps of applying a force comprises applying a force with a roller (32).

13. The method as claimed in claim 12 wherein said step of applying a force to said deformed blank of said spin stretching step comprises applying a force having a vector of between 44.5 and 445 kN (5 and 50 ton) in relation to said outside surface of said deformed blank.

14. The method as claimed in claim 11 wherein each of said heating steps comprises heating to a temperature of a maximum of 371°C (700 degrees Fahrenheit).

15. The method as claimed in claim 10, further comprising the step of:
annealing said raw circular blank (30) prior to said step of spinning said secured circular blank.

16. The method as claimed in claim 10 further comprising the step of age heat treating said dome (53).

17. The method as claimed in claim 16 wherein said dome is an aluminum alloy and said step of age heat treating said dome comprises age heat treating said dome (53) to a T8 temper.

## Patentansprüche

1. Verfahren zur Herstellung einer Kuppel (20, 53) aus einem im Wesentlichen runden Rohling (30), wobei ein Oberflächenbereichsbedarf der betreffenden Kuppel größer ist als der Oberflächenbereich des genannten Rohlings,
umfassend die Verfahrensschritte:
Scherformung des genannten Rohlings, wobei der betreffende Scherformungsschritt die Schritte umfasst:
koaxiales Sichern bzw. Festhalten einer Innenseitenfläche des Rohlings (30) an einem drehbaren, eine flache Nase aufweisenden konischen Dorn (31),
Drehen des betreffenden Rohlings (30) auf dem genannten, eine flache Nase aufweisenden konischen Dorn (31),
Erwärmen eines bestimmten Bereiches des genannten Rohlings, Ausüben einer Kraft auf eine Außenfläche des genannten Rohlings (30), derart, dass der betreffende Rohling eine Scherformung in eine Form des die flache Nase aufweisenden konischen Dornes (31) erfährt,
zusätzliche Scherformung des genannten Rohlings an bestimmten Stellen (35), derart, dass eine Dicke des betreffenden Rohlings an den bestimmten Stellen vermindert wird,
Entfernen des gestreckten Rohlings von dem genannten Dorn, Drücken auf die Innenseite des genannten Rohlings (40) zur Bildung eines kuppelförmigen Rohlings, wobei der betreffende Schritt des Drückens auf die Innenseite die Schritte umfasst: koaxiales Sichern bzw. Festhalten einer Außenseitenfläche des Rohlings (40) innerhalb eines drehbaren konkaven Kuppeldornes (41),
Drehen des genannten Rohlings auf dem konkaven Kuppeldorn, Erwärmen eines bestimmten Bereiches des betreffenden Rohlings,
Ausüben einer Kraft auf eine Innenfläche des betreffenden Rohlings (40), derart, dass der Rohling zur Bildung eines kuppelförmigen Rohlings (42) verformt wird,
Entfernen des betreffenden kuppelförmigen Rohlings (42) von dem konkaven Kuppeldorn (41)
und schließlich Drücken des betreffenden kuppelförmigen Rohlings (42) in die genannte Kuppel (53),
wobei der betreffende End-Drückschritt die Schritte umfasst:
koaxiales Sichern bzw. Festhalten der Innenseitenfläche des kuppelförmigen Rohlings (42) an einem drehbaren konvexen Kuppeldorn (51),
Drehen des betreffenden kuppelförmigen Rohlings auf dem genannten konvexen Kuppeldorn,
Erwärmen eines bestimmten Bereiches des genannten kuppelförmigen Rohlings,
Ausüben einer Kraft auf die genannte Außenseitenfläche des betreffenden kuppelförmigen Rohlings, derart, dass der kuppelförmige Rohlings (42) in eine Form des konvexen Kuppeldornes (51) zur Bildung der Kuppel (53) verformt wird.

2. Verfahren nach Anspruch 1, wobei der genannte Schritt der zusätzlichen Scherformung des Rohlings an bestimmten Stellen die Schritte umfasst:
Erwärmen eines bestimmten Bereiches des verformten Rohlings, Ausüben einer Kraft auf eine Außenseitenfläche des verformten Rohlings, derart, dass eine Dicke des betreffenden bestimmten Bereiches (35) des verformten Rohlings vermindert wird, und derart, dass der Oberflächenbereich des gestreckten Rohlings größer wird als der Oberflächenbereich des verformten Rohlings.

3. Verfahren nach Anspruch 2, wobei jeder der Schritte zur Ausübung einer Kraft die Ausübung einer Kraft mit einer Rolle bzw. Walze (32) umfasst.

4. Verfahren nach Anspruch 3, wobei der Schritt zur Ausübung einer Kraft auf den verformten Rohling bei dem Drück-Streckschritt die Ausübung einer Kraft mit einem Vektor zwischen 44,5 und 445 kN (5 und 50 Tonnen) in Bezug auf die genannte Außenseitenfläche des verformten Rohlings umfasst.

5. Verfahren nach Anspruch 2, wobei jeder der genannten Erwärmungsschritte die Erwärmung auf eine Temperatur von maximal 371°C (700°F) umfasst.

6. Verfahren nach Anspruch 1, ferner umfassend den Schritt des Glühens bzw. Anlassens des betreffenden unbearbeiteten kreisförmigen Rohlings (30) vor dem genannten Schritt des Drückens des gesicherten bzw. festgehaltenen kreisförmigen Rohlings.

7. Verfahren nach Anspruch 1, ferner umfassend den Schritt eines Erwärmens und Abschreckens der genannten Kuppel (53).

8. Verfahren nach Anspruch 1, ferner umfassend den Schritt einer Alterungs-Wärmebehandlung der genannten Kuppel (53).

9. Verfahren nach Anspruch 1, wobei die Kuppel aus einer Aluminiumlegierung besteht und wobei das Verfahren ferner die Behandlungsschritte des Erwärmens und Abschreckens und der Alterungserwärmung der betreffenden Kuppel (53) bei einer T62-Wärmebehandlung umfasst.

10. Verfahren zur Bildung einer Kuppel (20, 53) aus einem im Wesentlichen runden Rohling (30), wobei ein Oberflächenbedarf der betreffenden Kuppel größer ist als der Oberflächenbereich des Rohlings, umfassend die Verfahrensschritte:
Scherformung des genannten Rohlings, wobei der betreffende Scherformungsschritt die Schritte umfasst:
koaxiales Sichern bzw. Festhalten einer Innenseitenfläche des Rohlings (30) an einem drehbaren, eine flache Nase aufweisenden konischen Dorn (31),
Drehen des genannten Rohlings (30) auf dem eine flache Nase aufweisenden konischen Dorn (31),
Erwärmen eines bestimmten Bereiches des genannten Rohlings, Ausüben einer Kraft auf eine Außenfläche des betreffenden Rohlings (30), derart, dass der Rohling eine Scherformung in eine Form des eine flache Nase aufweisenden konischen Dornes (31) erfährt,
zusätzliche Scherformung des betreffenden Rohlings an bestimmten Stellen (35), derart, dass eine Dicke des Rohlings an den betreffenden bestimmten Stellen vermindert wird, Entfernen des gestreckten Rohlings von dem Dorn,
Drücken auf die Innenseite des Rohlings (40) zur Bildung eines kuppelförmigen Rohlings, wobei der betreffende Schritt des Drückens auf die Innenseite die Schritte umfasst:
koaxiales Sichern bzw. Festhalten einer Außenseitenfläche des genannten Rohlings (40) innerhalb eines drehbaren konkaven Kuppeldornes (41),
Drehen des betreffenden Rohlings auf dem konkaven Kuppeldorn, Erwärmen eines bestimmten Bereiches des Rohlings,
Ausüben einer Kraft auf eine Innenfläche des Rohlings (40), derart, dass der betreffende Rohling zur Bildung eines kuppelförmigen Rohlings (42) verformt wird,
Entfernen des kuppelförmigen Rohlings (42) von dem konkaven Kuppeldorn (41),
Erwärmen und Abschrecken des betreffenden kuppelförmigen Rohlings
und schließlich Drücken des kuppelförmigen Rohlings (42) in die genannte Kuppel (53), wobei der End-Drückschritt die Schritte umfasst:
koaxiales Sichern bzw. Festhalten der Innenseitenfläche des kuppelförmigen Rohlings (42) an einem drehbaren konvexen Kuppeldorn (51),
Drehen des betreffenden kuppelförmigen Rohlings auf dem genannten konvexen Kuppeldorn
und Ausüben einer Kraft auf die Außenseitenfläche des kuppelförmigen Rohlings, derart, dass der betreffende kuppelförmige Rohling (42) in eine Form des konvexen Kuppeldornes (51) zur bzw. unter Bildung des Domes (53) verformt wird.

11. Verfahren nach Anspruch 10, wobei der Schritt der zusätzlichen Scherformung des genannten Rohlings an bestimmten Stellen die Schritte umfasst:
Erwärmen eines bestimmten Bereiches des verformten Rohlings, Ausüben einer Kraft auf eine Außenseitenfläche des verformten Rohlings, derart, dass eine Dicke des betreffenden bestimmten Bereiches (35) des verformten Rohlings vermindert wird, und derart, dass der Oberflächenbereich des gestreckten Rohlings größer ist als der Oberflächenbereich des verformten Rohlings.

12. Verfahren nach Anspruch 11, wobei jeder der genannten Schritte zur Ausübung einer Kraft die Kraftausübung mittels einer Rolle bzw. Walze (32) umfasst.

13. Verfahren nach Anspruch 12, wobei der Schritt zur Ausübung einer Kraft auf den verformten Rohling beim Drück-Streckschritt die Ausübung einer Kraft mit einem Vektor zwischen 44,5 und 445 kN (5 und 50 Tonnen) in Bezug auf die genannte Außenseitenfläche des verformten Rohlings umfasst.

14. Verfahren nach Anspruch 11, wobei jeder der genannten Erwärmungsschritte eine Erwärmung auf eine Temperatur von maximal 371°C (700°F) umfasst.

15. Verfahren nach Anspruch 10, ferner umfassend den Schritt des Glühens bzw. Anlassens des unbearbeiteten kreisförmigen Rohlings (30) vor dem Schritt des Drückens des betreffenden festgehaltenen kreisförmigen Rohlings.

16. Verfahren nach Anspruch 10, ferner umfassend den Schritt einer Alterungs-Wärmebehandlung betreffenden Kuppel (53).

17. Verfahren nach Anspruch 16, wobei die betreffende Kuppel aus einer Aluminiumlegierung besteht und wobei der Schritt der Alterungs-Wärmebehandlung der betreffenden Kuppel eine Alterungs-Wärmebehandlung der betreffenden Kuppel (53) bei einer T8-Wärmebehandlung umfasst.

## Revendications

1. Un procédé pour former un dôme (20, 53) à partir d'un flan (30) essentiellement rond, où il est nécessaire que la zone de surface dudit dôme soit supérieure à la zone de surface dudit flan, ledit procédé comprenant les étapes de :
le fluotournage dudit flan, ladite étape de fluotournage comprenant les étapes de :
la sécurisation coaxiale d'une surface interne du flan (30) à un mandrin (31) conique à nez plat susceptible de tourner;
la rotation dudit flan (30) sur ledit mandrin (31) conique à nez plat;
le réchauffement d'une partie prédéterminée dudit flan;
l'application d'une force sur une surface externe dudit flan (30) de manière à ce que ledit flan soit fluotourné sous la forme dudit mandrin (31) conique à nez plat ; le fluotournage supplémentaire dudit flan dans des endroits (35) prédéterminés comme de manière à réduire l'épaisseur dudit flan dans lesdits endroits prédéterminés;
le retrait dudit flan étiré dudit mandrin;
le repoussage à l'intérieur dudit flan (40) pour former un flan ayant la forme d'un dôme, ladite étape de repoussage l'intérieur comprenant les étapes de :
la sécurisation coaxiale d'une surface externe dudit flan (40) dans un mandrin (41) à dôme concave susceptible de tourner;
la rotation dudit flan sur ledit mandrin à dôme concave;
le réchauffement d'une partie prédéterminée dudit flan;
l'application d'une force sur une surface interne dudit flan (40) de manière à ce que ledit flan se trouve déformé pour former un flan (42) en forme de dôme;
le retrait dudit flan (42) en forme de dôme dudit mandrin (41) en forme de dôme concave; et le repoussage jusqu'au bout dudit flan (42) en forme de dôme dans ledit dôme (53) ;
ladite étape de finition comprenant les étapes de :
la sécurisation coaxiale d'une surface interne dudit flan (42) en forme de dôme à un mandrin (51) à dôme convexe susceptible de tourner;
la rotation dudit flan en forme de dôme sur ledit mandrin à dôme convexe;
le réchauffement d'une partie prédéterminée dudit flan en forme de dôme;
l'application d'une force sur ladite surface externe dudit flan en forme de dôme de manière à ce que ledit flan (42) en forme de dôme se trouve déformé sous la forme dudit mandrin (51) à dôme convexe pour former le dôme (53);

2. Le procédé comme revendiqué dans la revendication 1 dans lequel ladite étape de fluotournage supplémentaire dudit flan dans des endroits prédéterminés comprend les étapes de :
le réchauffement d'une partie prédéterminée dudit flan déformé;
l'application d'une force sur une surface interne dudit flan déformé de manière à diminuer une épaisseur de ladite partie (35) prédéterminée dudit flan déformé et de manière à ce que la zone de surface dudit flan étiré soit supérieure à la zone de surface dudit flan déformé.

3. Le procédé comme revendiqué dans la revendication 2, dans lequel chacune desdites étapes d'application d'une force comprend l'application d'une force avec un rouleau (32).

4. Le procédé comme revendiqué dans la revendication 3, dans lequel ladite étape d'application d'une force audit flan déformé de ladite étape d'étirement par rotation comprend une force d'application ayant un vecteur situé entre 44,5 et 445 kN (5 et 50 tonnes) par rapport à ladite surface externe dudit flan déformé.

5. Le procédé comme revendiqué dans la revendication 2, dans lequel chacune desdites étapes de réchauffement comprend le réchauffement à une température d'un maximum de 371°C (700°F).

6. Le procédé comme revendiqué dans la revendication 1, comprenant en outre l'étape de :
le recuit dudit flan (30) circulaire brut avant ladite étape de repoussage dudit flan circulaire sécurisé.

7. Le procédé comme revendiqué dans la revendication 1, comprenant en outre l'étape de traitement thermique de mise en solution dudit dôme (53).

8. Le procédé comme revendiqué dans la revendication 1, comprenant en outre l'étape de traitement thermique de vieillissement dudit dôme (53).

9. Le procédé comme revendiqué dans la revendication 1, dans lequel ledit dôme est un alliage en aluminium, et dans lequel ledit procédé comprend en outre les étapes de traitement thermique de mise en solution et de vieillissement dudit dôme (53) à une température de T62.

10. Un procédé de formation un dôme (20, 53) à partir d'un flan (30) essentiellement rond, dans lequel il , où il est nécessaire que la zone de surface dudit dôme soit supérieure à la zone de surface dudit flan, ledit procédé comprenant les étapes de :
le fluotournage dudit flan, ladite étape de fluotournage comprenant les étapes de :
la sécurisation coaxiale d'une surface interne du flan (30) à un mandrin (31) conique à nez plat susceptible de tourner;
la rotation dudit flan (30) sur ledit mandrin (31) conique à nez plat;
le réchauffement d'une partie prédéterminée dudit flan;
l'application d'une force sur une surface externe dudit flan (30) de manière à ce que ledit flan soit fluotourné sous la forme dudit mandrin (31) conique à nez plat ;
de fluotournage supplémentaire dudit flan dans des endroits (35) prédéterminés comme de manière à réduire l'épaisseur dudit flan dans lesdits endroits prédéterminés;
le retrait dudit flan étiré dudit mandrin;
le repoussage à l'intérieur dudit flan (40) pour former un flan ayant la forme d'un dôme, ladite étape repoussage interne comprenant les étapes de :
la sécurisation coaxiale d'une surface externe dudit flan (40) dans un mandrin (41) à dôme concave susceptible de tourner;
la rotation dudit flan sur ledit mandrin à dôme concave;
le réchauffement d'une partie prédéterminée dudit flan;
l'application d'une force sur une surface interne dudit flan (40) de manière à ce que ledit flan se trouve déformé pour former un flan (42) en forme de dôme;
le retrait dudit flan (42) en forme de dôme dudit mandrin (41) en forme de dôme concave; et le repoussage final dudit flan (42) en forme de dôme dans ledit dôme (53) ; ladite étape de finition comprenant les étapes de :
la sécurisation coaxiale d'une surface interne dudit flan (42) en forme de dôme à un mandrin (51) à dôme convexe susceptible de tourner;
la rotation dudit flan en forme de dôme sur ledit mandrin à dôme convexe; et
l'application d'une force sur ladite surface externe dudit flan en forme de dôme de manière à ce que ledit flan (42) en forme de dôme se trouve déformé sous la forme dudit mandrin (51) à dôme convexe pour former le dôme (53).

11. Le procédé comme revendiqué dans la revendication 10, dans lequel ladite étape de fluotournage additionnel dudit flan dans des endroits prédéterminés comprend les étapes de :
le réchauffement d'une partie prédéterminée dudit flan déformé;
l'application d'une force sur une surface externe dudit flan déformé de manière à diminuer une épaisseur de ladite partie (35) prédéterminée dudit flan déformé et de manière à ce que la zone de surface dudit flan étiré soit supérieure à la zone de surface dudit flan déformé.

12. Le procédé comme revendiqué dans la revendication 11, dans lequel chacune desdites étapes d'application d'une force comprend l'application d'une force avec un rouleau (32).

13. Le procédé comme revendiqué dans la revendication 12, dans lequel ladite étape d'application d'une force audit flan déformé de ladite étape d'étirement par rotation comprend l'application d'une force ayant un vecteur situé entre 44,5 et 445 kN (5 et 50 tonnes) par rapport à ladite surface externe dudit flan déformé.

14. Le procédé comme revendiqué dans la revendication 11, dans lequel chacune desdites étapes de réchauffement comprend le réchauffement à une température d'un maximum de 371°C (700°F).

15. Le procédé comme revendiqué dans la revendication 10, comprenant en outre l'étape de :
recuit dudit flan (30) circulaire brut avant ladite étape de repoussage dudit flan circulaire sécurisé.

16. Le procédé comme revendiqué dans la revendication 10, comprenant en outre l'étape de traitement thermique de vieillissement dudit dôme (53).

17. Le procédé comme revendiqué dans la revendication 16 dans lequel ledit dôme est un alliage en aluminium, et ladite étape de traitement thermique de vieillissement dudit dôme comprend le traitement thermique de vieillissement dudit dôme (53) à une température de T8.
